(19) Europäisches Patentamt
European Patent Office
Office européen des brevets

(11) EP 4 718 395 A1

(12) EUROPEAN PATENT APPLICATION
published in accordance with Art. 153(4) EPC

(43) Date of publication:
01.04.2026 Bulletin 2026/14

(51) International Patent Classification (IPC):
G06V 20/59 (2022.01)    G06V 40/18 (2022.01)

(21) Application number: 24943659.3

(86) International application number:
PCT/CN2024/121533

(22) Date of filing: 26.09.2024

(87) International publication number:
WO 2026/011574 (15.01.2026 Gazette 2026/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 12.07.2024 CN 202410931779

(71) Applicant: Hangzhou Ruijian Zhixing Technology
Co., Ltd.
Hangzhou, Zhejiang 311222 (CN)

(72) Inventors:
• LEI, Peng
Hangzhou, Zhejiang 311222 (CN)
• HE, Zhuonan
Hangzhou, Zhejiang 311222 (CN)
• YANG, Yihong
Hangzhou, Zhejiang 311222 (CN)
• LIU, Guoqing
Hangzhou, Zhejiang 311222 (CN)

(74) Representative: Vogelbruch, Keang
VOGELBRUCH Patentanwaltsgesellschaft mbH
Paul-Gerhardt-Straße 16
40593 Düsseldorf (DE)

(54) **METHOD AND APPARATUS FOR RECOGNIZING SLEEP IN VEHICLE CABIN, ELECTRONIC DEVICE, AND MEDIUM**

(57) The present invention provides a vehicle cabin sleep recognition method and apparatus, electronic device, and medium. The method includes: a target image of a vehicle cabin, wherein the target image includes a passenger; determining whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition; if the eye region is reliable, determining a verification result for the sleep state of the passenger based on a detection result for a target behavior of the passenger in the target image; and determining a sleep state recognition result of the passenger in the vehicle cabin based on the verification result for the sleep state, thereby increasing the determination range of sleep recognition, improving the detection accuracy of sleep recognition, suppressing false detection of the sleep state, and further improving the detection accuracy of sleep recognition.

FIG. 1

**Description**

**CROSS-REFERENCE TO RELATED APPLICATIONS**

The present invention claims the priority to the Chinese patent application with the filling No. 202410931779.2 filed with the Chinese Patent Office on July 12, 2024, and entitled "VEHICLE CABIN SLEEP RECOGNITION METHOD AND APPARATUS, ELECTRONIC DEVICE, AND MEDIUM", the contents of which are incorporated herein by reference in entirety.

**TECHNICAL FIELD**

The present invention relates to the field of vehicle services, in particular to a vehicle cabin sleep recognition method and apparatus, electronic device, and medium.

**BACKGROUND ART**

With the continuous development of the vehicle industry, the application scenarios of vehicles are increasing, and people's requirements for vehicle services are becoming higher. During driving or in leisure scenarios when the vehicle is not in motion, passengers may sleep inside the vehicle, which requires the vehicle to recognize the sleep state of passengers and adjust the internal environment accordingly to promote rest and sleep quality of passengers.

In the prior art, sleep recognition judges whether a passenger is in a sleep state by analyzing the passenger's actions and behavior patterns, typically based on head pose. However, the sleep recognition result is prone to misjudgment due to the Euler angle solution for head pose and the influence of passenger height and position, and there is no effective sleep judgment approach for scenarios where the eyes are not visible when the passenger is in a lying down or torso-inclined posture.

**SUMMARY**

In view of this, an object of the present invention is to provide a vehicle cabin sleep recognition method and apparatus, electronic device, and medium, which can improve the sleep recognition accuracy for sleeping passengers in the vehicle cabin.

An embodiment of the present invention provides a vehicle cabin sleep recognition method, the method includes:

acquiring a target image of a vehicle cabin, wherein the target image includes a passenger;
determining whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;
if the eye region is reliable, determining a verification result for the sleep state of the passenger based on a detection result for a target behavior of the passenger in the target image; and
determining a sleep state recognition result of the passenger in the vehicle cabin based on the verification result for the sleep state.

In some embodiments, in the vehicle cabin sleep recognition method, the determining whether the passenger is in a sleep state by using a sleep state recognition method matched with an eye confidence judgment result includes:

determining whether the passenger is in the sleep state based on the passenger's eye state in the target image when the eye confidence judgment result of the passenger in the target image is qualified; and
determining whether the passenger is in a sleep state based on the passenger's body pose in the target image when the eye confidence judgment result of the passenger in the target image is unqualified.

In some embodiments, in the vehicle cabin sleep recognition method, the determining whether the passenger is in the sleep state based on the passenger's eye state in the target image includes:

determining a cumulative duration of eye-closed images with the eye state closed within a preset first time period based on the passenger's eye state in the target image;
judging whether the cumulative duration of the eye-closed images satisfies a preset eye-closed duration requirement; and
if the cumulative duration of the eye-closed images satisfies a preset eye-closed duration requirement, determining that the passenger is in a sleep state.

In some embodiments, in the vehicle cabin sleep recognition method, the determining whether the passenger is in a sleep state based on the passenger's body pose in the target image includes:

recognizing target human skeleton points of the passenger in the target image;
determining a head-body length ratio and a body trunk inclination of the passenger based on the target human skeleton points of the passenger, wherein the head-body length ratio represents a length ratio between a head and a torso of the passenger in the target image, and the body trunk inclination represents an inclination of the passenger's body trunk in the target image relative to a horizontal direction of the image; and
determining whether the passenger is in a sleep state based on the head-body length ratio and the body trunk inclination.

In some embodiments, in the vehicle cabin sleep recognition method, the determining whether the passenger is in a sleep state based on the head-body length ratio and the body trunk inclination includes:

determining a seating region of the passenger in the cabin based on the target human skeleton points of the passenger, wherein different seating regions correspond to different head-body length ratio conditions and body trunk inclination conditions;
judging whether the head-body length ratio of the passenger satisfies the head-body length ratio condition corresponding to the seating region, and whether the body trunk inclination of the passenger satisfies the body trunk inclination condition corresponding to the seating region; and
if both the head-body length ratio condition and the body trunk inclination condition are satisfied, determining that the passenger is in a sleep state.

In some embodiments, in the vehicle cabin sleep recognition method, different seating regions correspond to different head-body length ratio conditions and body trunk inclination conditions, and are determined based on images of passengers in a lying down or torso-inclined posture, obtained from different vehicle models.

In some embodiments, in the vehicle cabin sleep recognition method, different seating regions correspond to different body trunk inclination conditions, including:

a body trunk inclination condition corresponding to a passenger on a right side of a first row, wherein the torso inclines to the left;
a body trunk inclination condition corresponding to a passenger on a left side of the first row, wherein the torso inclines to the right; and
a body trunk inclination condition corresponding to a passenger in a second row, wherein the body trunk inclination conforms to a preset threshold range.

In some embodiments, in the vehicle cabin sleep recognition method, the body trunk inclination condition corresponding to the passenger on the right side of the first row is that a tangent value of the body trunk inclination is less than 0;

the body trunk inclination condition corresponding to the passenger on the left side of the first row is that a tangent value of the body trunk inclination is greater than 0; and
the body trunk inclination condition corresponding to the passenger in the second row is that a tangent value of the body trunk inclination is greater than a preset first threshold and less than a preset second threshold.

In some embodiments, in the vehicle cabin sleep recognition method, before the determining whether the passenger is in a sleep state by using a sleep state recognition method matched with an eye confidence judgment result based on the eye confidence judgment result of the passenger in the target image, the method further includes:
determining an eye confidence judgment result based on an included angle between a face orientation and a camera imaging direction, wherein the smaller the included angle between the face orientation and the camera imaging direction is, the higher the confidence of the eye regions for sleep recognition is; the larger the included angle between the face orientation and the camera imaging direction is, the lower the confidence of the eye regions for sleep recognition is.

In some embodiments, in the vehicle cabin sleep recognition method, the determining an eye confidence judgment result based on an included angle between a face orientation and a camera imaging direction includes:

determining an included angle parameter corresponding to the included angle between the face orientation and the camera imaging direction;

if the included angle parameter satisfies a preset confidence condition, determining that the eye confidence judgment result is qualified; and

if the included angle parameter does not satisfy the preset confidence condition, determining that the eye confidence judgment result is unqualified.

In some embodiments, in the vehicle cabin sleep recognition method, the determining an included angle parameter corresponding to the included angle between the face orientation and the camera imaging direction includes:

defining coordinates of an origin of a camera coordinate system in a head coordinate system;

calculating a first included angle between a line connecting the origin of the camera coordinate system and an origin of the head coordinate system and a z-axis of the head coordinate system, and determining an included angle parameter corresponding to the first included angle, wherein the included angle parameter corresponding to the first included angle is configured for eye confidence judgment; and

simultaneously calculating a second included angle between a projection, on an xOy plane of the head coordinate system, of the line connecting the origin of the camera coordinate system and the origin of the head coordinate system and an x-axis of the head coordinate system, and determining an included angle parameter corresponding to the second included angle.

In some embodiments, in the vehicle cabin sleep recognition method, the determining a verification result for the sleep state of the passenger based on a detection result for a target behavior of the passenger in the target image includes:

determining an action detection result of a target part of the passenger and/or a detection result of using a target object by the passenger in the target image within a preset second time period;

judging whether the action detection result of the target part and/or the detection result of using the target object satisfy corresponding sleep suppression conditions; and

if either the action detection result of the target part satisfies a corresponding sleep suppression condition or the detection result of using the target object satisfies a corresponding sleep suppression condition, determining that the verification result for the sleep state is sleep suppression.

In some embodiments, in the vehicle cabin sleep recognition method, the determining an action detection result of a target part of the passenger in the target image within a preset second time period includes:

determining a rotation angle parameter of the passenger's face in the target image within the preset second time period, wherein the rotation angle parameter represents a rotation angle of the face; and

determining a moving distance of the passenger's arm in the target image within the preset second time period.

In some embodiments, in the vehicle cabin sleep recognition method, the judging whether the action detection result of the target part satisfies a corresponding sleep suppression condition includes:

judging whether the rotation angle parameter of the face is greater than a preset third threshold; and

judging whether the moving distance of the passenger's arm is greater than a preset fourth threshold, wherein different vehicle models and different seating regions correspond to different preset fourth thresholds.

In some embodiments, in the vehicle cabin sleep recognition method, the judging whether the detection result of using the target object satisfies a corresponding sleep suppression condition includes:

detecting whether a target object is present in the image;

if the target object is present in the image, determining whether the target object is in a hand-held state based on a contact relationship between the target object and the hand, and a contact relationship between the target object and a preset reference object; and

if the target object is present in the image, determining that the verification result is sleep suppression.

In some embodiments, in the vehicle cabin sleep recognition method, the determining a sleep state recognition result of the passenger in the vehicle cabin based on the verification result for the sleep state includes:

when the verification result is sleep suppression, updating the passenger's sleep state recognition result to a non-sleep state; and

when the verification result is non-suppression of sleep, maintaining the passenger's sleep state recognition result as the sleep state.

In some embodiments, in the vehicle cabin sleep recognition method, the sleep state recognition result of passengers in the vehicle cabin is configured to adjust a state of at least one device in the vehicle cabin according to a preset sleep scenario.

In some embodiments, a vehicle cabin sleep recognition apparatus is further provided. The apparatus includes:

an acquisition module, configured to acquire a target image of a vehicle cabin, wherein the target image includes a passenger;

a judgment module, configured to determine whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;

a first determination module, configured to determine a verification result for the sleep state of the passenger based on a state of a target object in the target image upon determining that the passenger is in a sleep state; and

a second determination module, configured to determine a sleep state recognition result of the passenger in the vehicle cabin based on the verification result for the sleep state.

In some embodiments, an electronic device is further provided, including a processor, a memory, and a bus, wherein the memory stores machine-readable instructions executable by the processor; when the electronic device is in operation, the processor communicates with the memory via the bus; and the machine-readable instructions, when executed by the processor, cause the processor to perform the steps of the vehicle cabin sleep recognition method.

In some embodiments, a computer-readable storage medium is further provided, the computer-readable storage medium stores a computer program that, when executed by a processor, causes the processor to perform the steps of the vehicle cabin sleep recognition method.

In the embodiments of the present invention, a vehicle cabin sleep recognition method and apparatus, electronic device, and medium are provided. The vehicle cabin sleep recognition method includes: first acquiring a target image of a vehicle cabin; then, based on whether the passenger's eye region in the target image is reliable for sleep recognition, determining whether the passenger is in a sleep state by using different sleep state recognition methods; subsequently, suppressing the sleep state detection result based on a detection result of target behaviors of the passenger in the image, thereby expanding the determination scope of sleep recognition by utilizing different detection methods and improving the detection accuracy of sleep recognition; and additionally, preventing false detection of the sleep state based on the detection result of the target behaviors of the passenger, thereby further enhancing the detection accuracy of sleep recognition.

## BRIEF DESCRIPTION OF DRAWINGS

To explain the technical solutions of the embodiments of the present invention more clearly, the accompanying drawings will be briefly introduced. It should be understood that the drawings only show some embodiments of the present invention, so they should not be regarded as limiting the scope. For a person of ordinary skill in the art, other related drawings can be obtained according to these drawings without inventive effort.

FIG. 1 shows a flowchart of a vehicle cabin sleep recognition method according to an embodiment of the present invention;

FIG. 2 shows a schematic diagram of a head coordinate system and a camera coordinate system according to an embodiment of the present invention;

FIG. 3 shows a flowchart of a method for determining whether the passenger is in a sleep state according to an embodiment of the present invention;

FIG. 4 shows a flowchart of a method for determining whether the passenger is in a sleep state based on the body pose of the passenger in the target image according to an embodiment of the present invention;

FIG. 5 shows a recognition result of human skeleton points in the target image according to an embodiment of the present invention;

FIG. 6 shows a recognition result of human skeleton points in another target image according to an embodiment of the present invention;

FIG. 7 shows a recognition result of human skeleton points in another target image according to an embodiment of the present invention;

FIG. 8 shows a recognition result of human skeleton points in another target image according to an embodiment of the present invention;

FIG. 9 shows a schematic structural diagram of a vehicle cabin sleep recognition apparatus according to an embodiment of the present invention; and

FIG. 10 shows a schematic structural diagram of an electronic device according to an embodiment of the present invention.

## DETAILED DESCRIPTION OF EMBODIMENTS

To make the objectives, technical solutions, and advantages of the embodiments of the present invention clearer, the technical solutions in the embodiments of the present invention will be described clearly and completely in conjunction with the accompanying drawings in the embodiments of the present invention. It should be understood that the accompanying drawings in the present invention are for illustrative and descriptive purposes only, and are not intended to limit the scope of protection of the present invention. In addition, it should be understood that the schematic drawings are not drawn to scale. The flowcharts used in the present invention illustrate operations implemented according to some embodiments of the present invention. It should be understood that the operations in the flowchart may be implemented out of order, and steps without logical context may be reversed or implemented simultaneously. Furthermore, those skilled in the art may add one or more other operations to the flowchart or remove one or more operations from the flowchart under the guidance of the present invention.

Moreover, the described embodiments are only part of the embodiments of the present invention, and not all embodiments. The components of the embodiments of the present invention generally described and illustrated in the drawings herein may be arranged and designed in various different configurations. Therefore, the following detailed description of the embodiments of the present invention provided in the accompanying drawings is not intended to limit the scope of the claimed disclosure, but merely represents selected embodiments thereof. Based on the embodiments of the present invention, all other embodiments obtained by those skilled in the art without creative effort shall fall within the scope of protection of the present invention.

It should be noted that the term "including" is adopted in the embodiments of the present invention to signify the presence of the stated features, without excluding the addition of other features.

In the prior art, sleep recognition judges whether a passenger is in a sleep state by analyzing the passenger's actions and behavior patterns, typically based on head pose, resulting in low recognition accuracy, and there is no effective sleep judgment approach for scenarios where the eyes are not visible when the passenger is in a lying down or torso-inclined posture. Specifically, in the prior art, when using head pose to judge passenger sleep behavior, Euler angles are typically used. First, it is determined whether the passenger's head leans on the shoulder by judging whether the head roll angle and yaw angle are within a certain range, and whether the passenger is lowering their head by judging whether the head pitch angle is within a certain range. However, when using only Euler angles for judgment, there may be multiple different Euler angle solutions for a specific spatial direction, which affects the accuracy of sleep recognition. Additionally, due to inconsistent passenger positions in the cabin, a single configuration cannot adapt to passengers of different heights and distances, leading to errors in sleep recognition. It is particularly important to note that for scenarios where the eyes are not visible when the passenger is in a lying down or torso-inclined posture, there is no effective sleep judgment approach because the open/closed state of the eyes cannot be accurately recognized.

In addition to sleep recognition based on behavior recognition as described above, sleep recognition may also be performed based on physiological signal detection. Physiological signal detection is a method for recognizing a passenger's sleep state by monitoring human physiological parameters, such as heartbeat, respiration, muscle activity, sound, etc., which usually requires combination with sensors and devices in the vehicle. These devices may require installation and fixation in the vehicle, increasing cost and complexity. Moreover, physiological signals are typically weak and susceptible to various noises, affecting the accuracy of sleep recognition. Physiological signals may vary significantly among different individuals, such as heart rate and respiratory rate. Such individual differences may affect the accuracy of physiological signal monitoring.

Based on this, in the embodiments of the present invention, a vehicle cabin sleep recognition method and apparatus, electronic device, and medium are provided. The vehicle cabin sleep recognition method includes: first acquiring a target image of a vehicle cabin; then, based on whether the passenger's eye region in the target image is reliable for sleep recognition, determining whether the passenger is in a sleep state by using different sleep state recognition methods; subsequently, suppressing the sleep state detection result based on a detection result of target behaviors of the passenger in the image, thereby expanding the determination scope of sleep recognition by utilizing different detection methods and improving the detection accuracy of sleep recognition; and additionally, preventing false detection of the sleep state based on the detection result of the target behaviors of the passenger, thereby further enhancing the detection accuracy of sleep recognition.

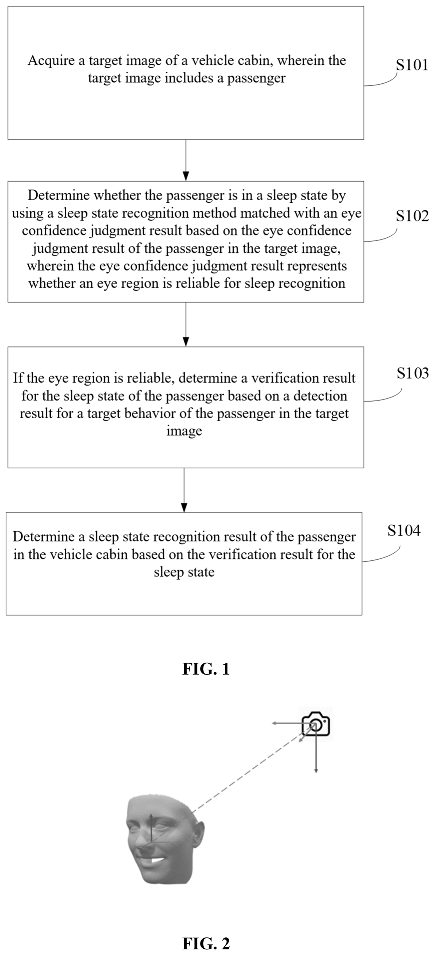

Please refer to FIG. 1, which shows a flowchart of a vehicle cabin sleep recognition method according to an embodiment of the present invention. As shown in FIG. 1, the vehicle cabin sleep recognition method includes the following steps S101 to S104:

> S101: acquiring a target image of a vehicle cabin, wherein the target image includes a passenger;
> S102: determining whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;
> S103: if the eye region is reliable, determining a verification result for the sleep state of the passenger based on a detection result for a target behavior of the passenger in the target image; and
> S104: determining a sleep state recognition result of the passenger in the vehicle cabin based on the verification result for the sleep state.

In step S101, a target image of a vehicle cabin is acquired, wherein the target image includes a passenger.

The target image of the vehicle cabin is an image captured by an in-vehicle camera within the vehicle cabin. Different vehicle models may have the in-vehicle camera installed at different positions. Typically, the in-vehicle camera is located at the middle of the front of the vehicle cabin (above the middle of the front windshield). Installing the camera above the middle of the front windshield ensures a wider field of view for the camera, enabling it to capture more regions inside the vehicle, thereby providing a more comprehensive interior image and ensuring that a front-facing image of each passenger is captured as much as possible.

The target image includes passengers. It should be noted that the passengers here include those in every seat, i.e., both the driver and non-drivers.

When the vehicle is in a driving state, the driver typically cannot be in a sleep state, especially lying down or reclining, but may be in a fatigued driving state, such as dozing off. Therefore, the vehicle cabin sleep recognition method described in the embodiment of the present invention is still necessary for the driver.

When the vehicle is in a non-driving state, i.e., a leisure state, passengers in every seat (including the driver's seat) may be in a sleep state of lying down or reclining.

Since the in-vehicle camera typically captures in-vehicle video, the target image, which is an image frame in the video inside the vehicle cabin captured by the in-vehicle camera, may also be referred to as an in-vehicle video image.

The target image may be a part of image frames from the in-vehicle video.

Exemplarily, in some embodiments, the target image is an image frame in the in-vehicle video that satisfies preset image quality conditions; that is, only frames that satisfy specific image quality criteria are selected as target images.

The preset image quality conditions may include sharpness greater than a preset sharpness threshold, image brightness greater than a preset brightness threshold, noise lower than a preset noise threshold, and so on.

Exemplarily, in some embodiments, the target image is an image frame extracted from the in-vehicle video at a preset frame interval. For instance, the in-vehicle camera may have a frame rate of 30 fps or 60 fps, and processing dozens of images per second requires significant computational resources, reducing the real-time performance of sleep recognition. Therefore, the part of image frames, which are intermittent, are sufficient for sleep recognition. For example, if the preset frame interval is 5 frames, one frame is extracted every 5 frames, resulting in 6 frames per second as target images.

In some embodiments, the target images may be combined from image frames in the in-vehicle video that satisfy preset image quality conditions and image frames extracted from the in-vehicle video at a preset frame interval.

Specifically, first, each image frame in the in-vehicle video is analyzed in real time to determine whether it satisfies the preset image quality conditions. For image frames that satisfy the preset image quality conditions, they are then extracted according to the preset frame interval, so that the final target images both satisfy the image quality requirements and adhere to the preset frame interval. This combination strategy ensures that high-quality and representative in-vehicle video image frames are obtained under limited resources, providing strong support for subsequent applications.

In some embodiments, when the in-vehicle control system is configured in an automatic sleep recognition mode, sleep recognition is automatically performed upon acquiring the target image of the vehicle cabin.

That is, the automatic sleep recognition mode of the in-vehicle control system may be enabled or disabled.

In step S102, based on an eye confidence judgment result of the passenger in the target image, a sleep state recognition method matched with the eye confidence judgment result is used to determine whether the passenger is in a sleep state, wherein the eye confidence judgment result represents whether an eye region is reliable for sleep recognition.

Whether the eye confidence of the passenger in the target image satisfies a preset confidence condition is determined; if yes, it is determined that the eye confidence judgment result is qualified; if not, it is determined that the eye confidence judgment result is unqualified.

The eye confidence is determined based on an included angle between a face orientation and a camera imaging direction. The smaller the included angle between the face orientation and the camera imaging direction is, the higher the confidence of the eye regions for sleep recognition is; the larger the included angle between the face orientation and the camera imaging direction is, the lower the confidence of the eye regions for sleep recognition is.

The included angle between the face orientation and the camera imaging direction refers to an angle in 3D space. Exemplarily, if the camera captures from the passenger's side face or from above the passenger's head, the passenger's eyes are substantially invisible in the image. In such scenarios, the eye region is unreliable for sleep recognition.

When there are multiple passengers in the target image, it is necessary to determine, according to an eye confidence judgment result of each passenger, whether each passenger is in a sleep state by using a sleep state recognition method matched with the eye confidence judgment result of that passenger.

That is, for multiple passengers in the target image, the same sleep state recognition method is not used for all; the eye confidence judgment results are different for different passengers, and their corresponding sleep state recognition methods are different.

Exemplarily, if the target image contains passenger A and passenger B, where passenger A has a front face and passenger B has a side face, then passenger A and passenger B are assessed using different sleep state recognition methods to determine whether they are in a sleep state.

Based on this, in the vehicle cabin sleep recognition method according to an embodiment of the present invention, before the determining whether the passenger is in a sleep state by using a sleep state recognition method matched with an eye confidence judgment result based on the eye confidence judgment result of the passenger in the target image, the method further includes:

determining an eye confidence judgment result based on an included angle between a face orientation and a camera imaging direction, wherein the smaller the included angle between the face orientation and the camera imaging direction is, the higher the confidence of the eye regions for sleep recognition is; the larger the included angle between the face orientation and the camera imaging direction is, the lower the confidence of the eye regions for sleep recognition is.

Specifically, the determining an eye confidence judgment result based on an included angle between a face orientation and a camera imaging direction includes:

determining an included angle parameter corresponding to the included angle between the face orientation and the camera imaging direction;

if the included angle parameter satisfies a preset confidence condition, determining that the eye confidence judgment result is qualified; and

if the included angle parameter does not satisfy the preset confidence condition, determining that the eye confidence judgment result is unqualified.

The face orientation, i.e., the face orientation, is determined based on head pose. The included angle between the face orientation and the camera imaging direction is also related to the passenger's head position.

When detecting the passenger's head position and pose, the head position may be represented as the coordinates of the head relative to the camera, and the head pose may be represented as the rotation relationship of the head coordinate system relative to the camera coordinate system. Please refer to FIG. 2, which shows a schematic diagram of the head coordinate system and the camera coordinate system according to an embodiment of the present invention.

In the embodiment of the present invention, when defining the passenger's head pose, two included angle parameters of the included angle between the face orientation and the camera imaging direction are used.

Specifically, in the vehicle cabin sleep recognition method described in the embodiment of the present invention, the determining an included angle parameter corresponding to the included angle between the face orientation and the camera imaging direction includes:

defining coordinates of an origin of a camera coordinate system in a head coordinate system;

calculating a first included angle between a line connecting the origin of the camera coordinate system and an origin of the head coordinate system and a z-axis of the head coordinate system, and determining an included angle parameter corresponding to the first included angle, wherein the included angle parameter corresponding to the first included angle is configured for eye confidence judgment; and

simultaneously calculating a second included angle between a projection, on an xOy plane of the head coordinate system, of the line connecting the origin of the camera coordinate system and the origin of the head coordinate system and an x-axis of the head coordinate system, and determining an included angle parameter corresponding to the second included angle.

By defining the coordinates of the origin of the camera coordinate system in the head coordinate system, the relative positional relationship between the passenger's head and the camera is represented.

Please refer to FIG. 2. The origin of the camera coordinate system is the optical center of the camera, the x-axis and y-axis are parallel to the X-axis and Y-axis of the image, and the z-axis orientation is the optical axis of the camera and is perpendicular to the image plane. Specifically, for the image coordinate system, the x-axis points to the right and the y-axis points downward; for the camera coordinate system, the origin is at the center of the main optical axis of the lens, the positive x-direction is to the right, the positive y-direction is downward, and the positive z-direction is forward. In this way, the x and y directions are consistent with the directions of the image coordinate system, and the z direction is the depth of field, which also conforms to the definition of the right-handed coordinate system, facilitating vector calculation in the algorithm.

In summary, the z-axis of the camera coordinate system is consistent with the direction of the optical axis of the camera, both pointing to the front of the camera.

The head coordinate system is defined as follows: the origin of the head coordinate system is located at the center of the human head; the X-axis is parallel to the line connecting the left and right eyes, the Y-axis is parallel to the line connecting the nose endpoint and the chin endpoint, and the Z-axis is perpendicular to the X-axis and Y-axis, representing the face orientation.

Based on this, the first included angle between the line connecting the origin of the camera coordinate system and the origin of the head coordinate system and the z-axis of the head coordinate system can represent whether an eye region is reliable for sleep recognition.

The included angle parameter is configured to represent attributes such as the size and direction of the included angle, and may be an angle or a trigonometric function value corresponding to the angle.

The process of calculating the first included angle between the line connecting the origin of the camera coordinate system and the origin of the head coordinate system and the z-axis of the head coordinate system, and the second included angle between the projection of said line on the xOy plane of the head coordinate system and the x-axis of the head coordinate system, is described in detail below. For ease of expression, in the embodiment of the present invention, the first included angle between the line connecting the origin of the camera coordinate system and the origin of the head coordinate system and the z-axis of the head coordinate system is referred to as latitude, and the second included angle between the projection of said line on the xOy plane of the head coordinate system and the x-axis of the head coordinate system is referred to as longitude.

That is, through the projection of the line connecting the origin of the camera coordinate system and the origin of the head coordinate system on the xOy plane of the head coordinate system, the second included angle is provided between this projection and the x-axis of the head coordinate system.

Specifically, the coordinates of the origin of the camera coordinate system in the head coordinate system are defined as *(x, y, z)*, and vector normalization is performed on the *(x, y, z)* to obtain the normalized vector $(\bar{x}, \bar{y}, \bar{z})$.

Specifically,

$$\bar{x} = x/sqrt(x^2 + y^2 + z^2)), \bar{y} = y/sqrt(x^2 + y^2 + z^2)), \bar{z} = z/sqrt(x^2 + y^2 + z^2)).$$

From the normalized vector $(\bar{x}, \bar{y}, \bar{z})$, the representation of longitude and latitude can be obtained. Specifically, longitude *longitude* = $\arctan(\bar{y}/\bar{x})$, and latitude *latitude* = $arccos(\bar{z})$.

Referring to FIG. 2, it can be seen that the $\arctan(\bar{y}/\bar{x})$ is a second included angle between a projection, on an xOy plane of the head coordinate system, of the line connecting the origin of the camera coordinate system and the origin of the head coordinate system and an x-axis of the head coordinate system; and $arccos(\bar{z})$ is the second included angle between the line connecting the origin of the camera coordinate system and the origin of the head coordinate system and a z-axis of the head coordinate system.

According to the definition of latitude and longitude, when the face is oriented towards the camera, the camera is located on the z-axis of the head coordinate system, the normalized vector is expressed as ($\bar{x}$=0, $\bar{y}$=0, $\bar{z}$=1), and at this time latitude=0, longitude=0; similarly, when the camera is located in the positive direction of the x-axis of the head coordinate system, latitude=90, longitude=0; when the camera is located in the positive direction of the y-axis of the head coordinate system, latitude=90, longitude=90. According to the calculation method of latitude and longitude, it is used as the basis for judging eye quality. When the latitude is smaller, the included angle between the face orientation and the camera imaging direction is smaller, and the confidence of the eyes for quality judgment is higher. Conversely, when the latitude is larger, the eyes are affected by the side face, the eyes are not visible, and thus the confidence is lower.

However, when judging solely based on Euler angles, there may be multiple different Euler angle solutions for a specific spatial direction. Furthermore, due to inconsistent passenger positions within the cabin, it is impossible to adapt to passengers of different heights and distances using only one configuration, and different configurations are required for different Euler angle positions. Correspondingly, in the embodiment of the present invention, using latitude and longitude to analyze whether the eyes are visible is proposed. The same configuration constraints can be applied to different latitudes and longitudes at various positions within the cabin, thereby improving computational efficiency.

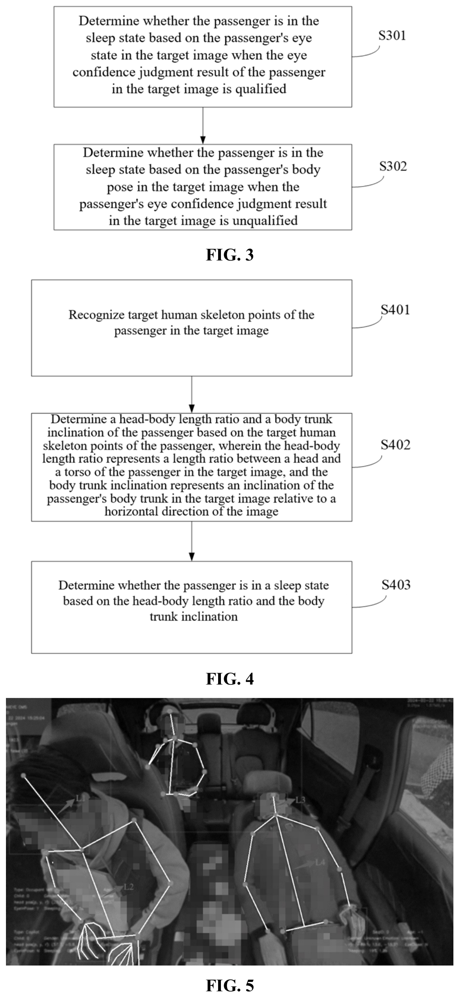

Please refer to FIG. 3, which shows a flowchart of a method for determining whether the passenger is in a sleep state according to an embodiment of the present invention. As shown in FIG. 3, in the embodiment of the present invention, the determining whether the passenger is in a sleep state by using a sleep state recognition method matched with an eye confidence judgment result includes the following steps S301 to S302:

S301: determining whether the passenger is in the sleep state based on the passenger's eye state in the target image when the eye confidence judgment result of the passenger in the target image is qualified; and

S302: determining whether the passenger is in a sleep state based on the passenger's body pose in the target image when the eye confidence judgment result of the passenger in the target image is unqualified.

That is, the sleep state recognition method includes a sleep recognition method based on eye state and a sleep recognition method based on body pose.

The eye states include an open state and a closed state.

Specifically, the determining whether the passenger is in the sleep state based on the passenger's eye state in the target image includes:

determining a cumulative duration of eye-closed images with the eye state closed within a preset first time period based on the passenger's eye state in the target image;

judging whether the cumulative duration of the eye-closed images satisfies a preset eye-closed duration requirement; and

if the cumulative duration of the eye-closed images satisfies a preset eye-closed duration requirement, determining that the passenger is in a sleep state.

Satisfying the preset eye-closed duration requirement means that the cumulative duration of eye-closed images is greater than a preset eye-closed duration threshold.

In some embodiments, the cumulative duration of eye-closed images within the preset first time period is determined based on the number of eye-closed images and the sampling duration.

Based on this, the number of eye-closed images within the preset first time period can also be determined.

Then, it is judged whether the number of eye-closed images satisfies a preset number requirement.

If the number of eye-closed images satisfies a preset number requirement, it is determined that the passenger is in a sleep state.

The number of eye-closed images satisfying the preset number requirement may mean the number of eye-closed images being greater than a first preset number threshold.

Specifically, after recognizing the eye state of the passenger in the target image, the eye state recognition result of the current frame target image is updated to a sleep window, and the window duration of the sleep window is the preset first time period.

When the number of eye-closed images in the target images within the sleep window satisfies the preset number requirement, it is determined that the passenger is in a sleep state.

Based on the sleep window, the passenger's sleep state can be determined more promptly.

The passenger's eye state in the target image is recognized, specifically, an eye-open/closed classification model is used to recognize the passenger's eye state in the target image.

That is, the target image is input to the eye-open/closed classification model, and the eye-open/closed classification model outputs the passenger's eye-open/closed information.

Please refer to FIG. 4, which shows a flowchart of a method for determining whether the passenger is in a sleep state based on the passenger's body pose in the target image according to an embodiment of the present invention. As shown in FIG. 4, the determining whether the passenger is in a sleep state based on the passenger's body pose in the target image includes the following steps S401 to S403:

S401: recognizing target human skeleton points of the passenger in the target image;

S402: determining a head-body length ratio and a body trunk inclination of the passenger based on the target human skeleton points of the passenger, wherein the head-body length ratio represents a length ratio between a head and a torso of the passenger in the target image, and the body trunk inclination represents an inclination of the passenger's body trunk in the target image relative to a horizontal direction of the image; and

S403: determining whether the passenger is in a sleep state based on the head-body length ratio and the body trunk inclination.

Human skeleton points, also known as skeletal keypoints, typically refer to specific locations configured to describe human pose in human pose recognition. These points are typically located at human joints, characteristic parts, etc., and are used to construct a skeletal model of the human body. Taking a common pose recognition system as an example, skeletal keypoints include: head top, the highest point of the head; neck, the top of the cervical spine; shoulders, including left shoulder and right shoulder, located at the left and right shoulder joints respectively; elbows, including left elbow and right elbow, located at the left and right elbow joints respectively; wrists, including left wrist and right wrist, located at the left and right wrist positions respectively; and hips, including left hip and right hip, located at the left and right hip joints respectively.

It should be noted that, in the embodiment of the present invention, due to space constraints within the cabin and camera position limitations, typically only the upper body human skeleton points mentioned above need to be recognized.

The body trunk includes the head and the torso.

The horizontal direction of the target image is from left to right, and the origin of the coordinate system is the upper left corner of the target image.

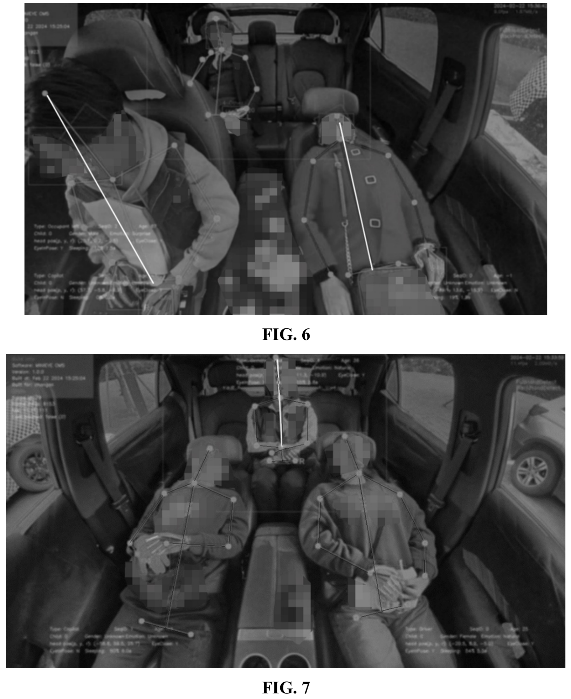

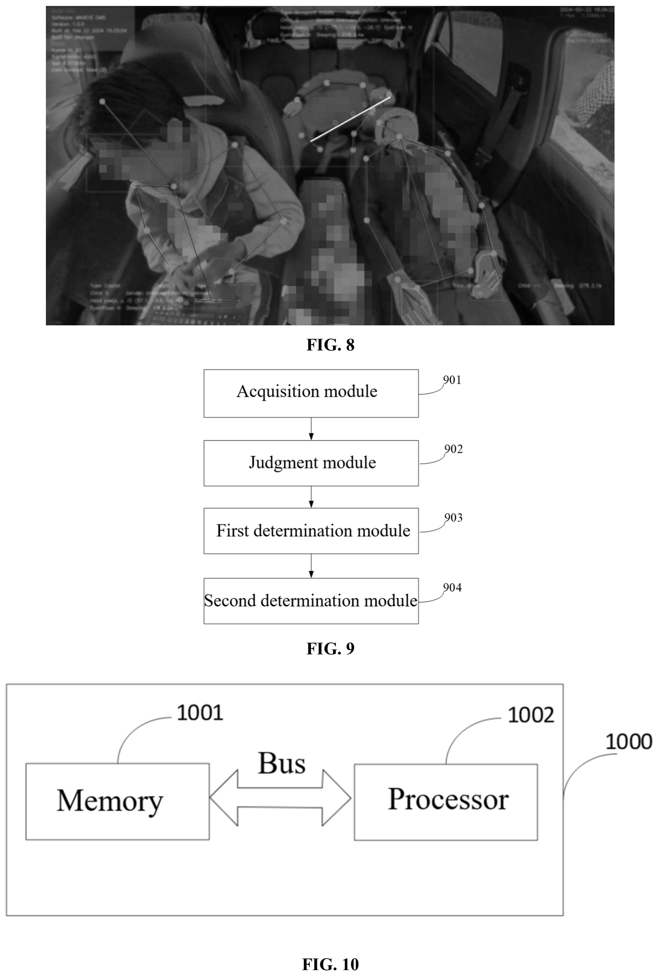

Please refer to FIGS. 5, 6, 7, and 8. FIG. 5 shows the recognition result of human skeleton points in the target image according to an embodiment of the present invention; FIG. 6 shows the recognition result of human skeleton points in another target image according to an embodiment of the present invention; FIG. 7 shows the recognition result of human skeleton points in yet another target image according to an embodiment of the present invention; and FIG. 8 shows the recognition result of human skeleton points in still another target image according to an embodiment of the present invention.

Take FIG. 5 as an example. The head length of the person sitting on the left side of the front row is L1, and the torso length is L2. The ratio of L1 to L2 is close to 1:1. The person lying on the right side of the front row has a head length of L3 and a torso length of L4. Obviously, the ratio of L3 to L4 is small. The ratio of the head length to the torso length in the target image is referred to as the head_body_ratio. Whether the person in the front row is sitting or lying down is determined by the head-body length ratio, thereby determining whether the passenger is sleeping. A threshold, denoted by th_head_body_ratio, is set for the head-body length ratio, and head_body_ratio < th_head_body_ratio is defined as satisfying Index 1.

Take the aforementioned FIG. 6 as an example. For the person on the right side of the front row, when lying down, the body trunk (marked by the line segment from the top of the head to the midpoint between the left and right hip joints) leans to the left. The included angle between the white line and the X-axis of the target image (horizontal, pointing to the right at the bottom) is referred to as body_ang, i.e., the body trunk inclination. The body trunk leaning to the left means $\tan(body\_ang) < 0$, and leaning to the right when sitting means $\tan(body\_ang) > 0$. For the person on the left side of the front row, it is just the opposite. When lying down, the body trunk leans to the right ($\tan(body\_ang) > 0$), and when sitting, the body trunk leans to the left ($\tan(body\_ang) < 0$). Therefore, $\tan(body\_ang) < 0$ for the right side of the front row, and $\tan(body\_ang) > 0$ for the left side of the front row is defined as satisfying Index 2. Index 2 can also be used to determine whether the person in the front row is sitting or lying down.

To reduce misjudgment, when a person satisfies both Index 1 and Index 2, the person is considered to be in a sleep state.

For people in the back row, reference is made to FIGS. 7 and 8. Whether they are reclining and sleeping can be determined by the body trunk inclination body_ang. A preset first threshold th_back_left and a preset second threshold th_back_right are set to define a preset threshold range for the body trunk inclination. When $th\_back\_left < \tan(body\_ang) < th\_back\_right$, the person is considered to be in a sleep state.

At the same time, as can be seen from FIGS. 7 and 8, for people in the back row, the head-body length ratio when sitting is greater than that when reclining.

Based on the exemplary analysis of FIGS. 5-8 above, when determining whether the passenger is in a sleep state based on the head-body length ratio and the body trunk inclination, the head-body length ratio conditions and the body trunk inclination conditions corresponding to different seating regions are different.

The seating regions include the left side of the first row, the right side of the first row, and the second row.

Based on this, in the embodiment of the present invention, the determining whether the passenger is in a sleep state based on the head-body length ratio and the body trunk inclination includes:

determining a seating region of the passenger in the cabin based on the target human skeleton points of the passenger;
judging whether the head-body length ratio of the passenger satisfies the head-body length ratio condition corresponding to the seating region, and whether the body trunk inclination of the passenger satisfies the body trunk inclination condition corresponding to the seating region; and
if both the head-body length ratio condition and the body trunk inclination condition are satisfied, determining that the passenger is in a sleep state.

Because the position of the seat in the vehicle cabin in the target image is basically fixed, the position of the passenger's left and right hip joints in the target image are within a certain range.

Even if the position of the seat in the vehicle cabin can be adjusted forward and backward, the position of the passenger's left and right hip joints in the target image are still within a certain range.

Therefore, the determining a seating region of the passenger in the cabin based on the target human skeleton points of the passenger specifically includes: determining the passenger's seating region in the cabin according to the position of the passenger's target human skeleton point in the target image and the position ranges of different seating regions in the target image.

The target human skeleton points are the skeleton points of the passenger's left and right hip joints.

Different seating regions correspond to different body trunk inclination conditions, including:

a body trunk inclination condition corresponding to a passenger on a right side of a first row, wherein the torso inclines to the left;
a body trunk inclination condition corresponding to a passenger on a left side of the first row, wherein the torso inclines to the right; and
a body trunk inclination condition corresponding to a passenger in a second row, wherein the body trunk inclination conforms to a preset threshold range.

The body trunk inclination conditions are quantified to facilitate calculation. Specifically, the body trunk inclination condition corresponding to the passenger on the right side of the first row is that a tangent value of the body trunk inclination is less than 0, i.e., $\tan(body\_ang) < 0$.

The body trunk inclination condition corresponding to the passenger on the left side of the first row is that a tangent value of the body trunk inclination is greater than 0, i.e., $\tan(body\_ang) > 0$.

The body trunk inclination condition corresponding to the passenger in the second row is that a tangent value of the body trunk inclination is greater than a preset first threshold and less than a preset second threshold, i.e., $th\_back\_left < \tan(body\_ang) < th\_back\_right$.

The body_ang is the body trunk inclination.

Specifically, different seating regions correspond to different head-body length ratio conditions and body trunk inclination conditions, and are determined based on images of passengers in a lying down or torso-inclined posture, obtained from different vehicle models.

Parameters such as the interior space parameters of the vehicle cabin, the position of the camera, the internal parameters of the camera, and the position of the seat in different vehicle models will affect the head-body length ratio and the body trunk inclination in the target image collected by the camera. Therefore, the head-body length ratio conditions and the body trunk inclination conditions are specific to the corresponding vehicle model.

Specifically, for a vehicle of a certain model, multiple images of passengers with different heights, weights, and body shapes in a lying down or torso-inclined posture can be used to determine the different head-body length ratio conditions and body trunk inclination conditions corresponding to different seating regions.

In step S103, when determining that the passenger is in a sleep state, a verification result for the passenger's sleep state is determined based on the detection result of the passenger's target behavior in the target image.

When a passenger can still move, such as moving their arms, turning their head, playing with a mobile phone, reading a book, eating snacks, etc., it represents that the passenger is not sleeping.

Therefore, in the embodiment of the present invention, some target behaviors are set. When it is detected that the passenger has performed the target behaviors, it is determined that the passenger is in a non-sleep state, i.e., the verification result is non-suppression of sleep.

The detection result of the passenger's target behavior has a binary outcome: target behavior detected or target behavior not detected.

In the embodiment of the present invention, target behaviors are categorized into two types, for which respective detection strategies are defined. The target behaviors include movement of a target part of the passenger and use of a target object by the passenger.

Specifically, the determining a verification result for the sleep state of the passenger based on a detection result for a target behavior of the passenger in the target image includes:

determining an action detection result of a target part of the passenger and/or a detection result of using a target object by the passenger in the target image within a preset second time period;
judging whether the action detection result of the target part and/or the detection result of using the target object satisfy corresponding sleep suppression conditions; and
if either the action detection result of the target part satisfies a corresponding sleep suppression condition or the detection result of using the target object satisfies a corresponding sleep suppression condition, determining that the verification result for the sleep state is sleep suppression.

The target part refers to a body part that can perform relatively large actions in the cabin and is easily detected, such as head rotation, arm movement, etc. Correspondingly, leg actions cannot be detected, and the torso cannot perform large movements alone (torso movement drives arm movement).

Based on this, in the embodiment of the present invention, the target parts are specifically the hands and the head.

Specifically, the determining an action detection result of a target part of the passenger in the target image within a preset second time period includes:

determining a rotation angle parameter of the passenger's face in the target image within the preset second time period, wherein the rotation angle parameter represents a rotation angle of the face; and
determining the moving distance of the passenger's arm in the target image.

In the embodiment of the present invention, the rotation angle parameter of the face specifically represents the change in the included angle between the face orientation and the camera imaging direction. Specifically, it is determined based on longitude *longitude* and latitude *latitude*.

Specifically, when calculating the longitude *longitude* and latitude *latitude* by judging the eye confidence, the longitude *longitude* and latitude *latitude* are added to the head pose time window to determine whether the head pose has changed significantly within the head pose time window. A set of preset third thresholds th_rotate_lat and th_rotate_long are set. That is, when latitude > th_rotate_lat or longitude > th_rotate_long, it represents that the head pose has changed significantly.

The moving distance of the passenger's arm in the target image is determined, and human arm movement information is used to suppress sleep judgment. The arm position is added to the arm movement time window to determine whether the arm has moved significantly within the preset second time period.

Specifically, the preset fourth threshold for the front-row arm is set as th_front_hand_distance, and the preset fourth threshold for the rear-row arm is set as th_back_hand_distance. That is, if the moving distance of the front-row arm or palm > th_front_hand_distance or the moving distance of the rear-row arm or palm > th_back_hand_distance, it represents that the arm has moved significantly within the preset second time period.

The front-row arm and the rear-row arm correspond to different preset fourth thresholds because the distances from the front-row arm and the rear-row arm to the camera are different, and their sizes in the image are different. Therefore, the same moving distance in real space corresponds to different changed distances in the image.

The judging whether the action detection result of the target part satisfies a corresponding sleep suppression condition includes:

judging whether the rotation angle parameter of the face is greater than a preset third threshold; and
judging whether the moving distance of the passenger's arm is greater than a preset fourth threshold, wherein different vehicle models and different seating regions correspond to different preset fourth thresholds.

It should be noted that the position of the passenger's arm in the target image is determined based on the human skeleton points corresponding to the arm, for example, based on the skeleton points of the passenger's elbow and wrist. That is, the recognized human skeleton points are not only used for sleep state recognition but also for detecting the passenger's target behavior in the target image, achieving multiple functions with one detection.

The judging whether the action detection result of the target part satisfies a corresponding sleep suppression condition includes:

judging whether the rotation angle parameter of the face is greater than a preset third threshold; and
judging whether the moving distance of the passenger's arm is greater than a preset fourth threshold, wherein different vehicle models and different seating regions correspond to different preset fourth thresholds.

Correspondingly, if any judgment result is yes, then the verification result for the sleep state is determined to be sleep suppression; if all judgment results are no, then the verification result for the sleep state is determined to be non-suppression of sleep.

In the embodiment of the present invention, sleep judgment is also suppressed based on the person's use of a target object.

Specifically, in the vehicle cabin sleep recognition method, the judging whether the detection result of using the target object satisfies a corresponding sleep suppression condition includes:

detecting whether a target object is present in the image;
if the target object is present in the image, determining whether the target object is in a hand-held state based on a contact relationship between the target object and the hand, and a contact relationship between the target object and a preset reference object; and
if the target object is present in the image, determining that the verification result is sleep suppression.

The target object may be a mobile phone, food, a book, a tablet, etc.

The preset reference object may be the seat surface.

Whether the target object is held in the hand is judged based on the contact relationship between the target object and the hand. The contact relationship between the target object and the preset reference object distinguishes whether the target object is placed on the preset reference object and simultaneously in contact with the hand, or is used by hand.

Therefore, based on the contact relationship between the target object and the hand, and the contact relationship between the target object and the preset reference object, whether the target object is in a hand-held state can be judged more accurately, that is, whether the passenger is using the target object can be judged more accurately.

The contact relationship between the target object and the hand is determined based on the position of the hand skeleton points and the position of the target object. If the positional difference is less than a preset fifth threshold, it is determined that the target object is in contact with the hand.

The target object and the preset reference object are determined based on the position of the preset reference object and the position of the target object. If the positional difference is less than a preset sixth threshold, it is determined that the target object is in contact with the preset reference object.

Exemplarily, when using the information of a person playing with a mobile phone to suppress sleep judgment, it is first detected whether there is a held mobile phone in the target image (hand is in contact with the mobile phone). If so, it is judged whether the held mobile phone is placed on the seat. If not, sleep judgment is suppressed.

In Step S104, a sleep state recognition result of the passenger in the vehicle cabin is determined based on the verification result for the sleep state.

Specifically, the determining a sleep state recognition result of the passenger in the vehicle cabin based on the verification result for the sleep state includes:

> when the verification result is sleep suppression, updating the passenger's sleep state recognition result to a non-sleep state; and
> when the verification result is non-suppression of sleep, maintaining the passenger's sleep state recognition result as the sleep state.

Based on the verification of the sleep state, some false sleep recognitions are suppressed, improving the accuracy of sleep state recognition.

In the vehicle cabin sleep recognition method described in the embodiment of the present invention, the sleep state recognition result of passengers in the vehicle cabin is configured to adjust a state of at least one device in the vehicle cabin according to a preset sleep scenario.

The device state includes: seat angle, vehicle audio volume, interior lighting, temperature controlled by the temperature control device (e.g., in-vehicle air conditioning), etc.

Specifically, when the sleep state recognition result represents that the passenger is in a sleep state, a sleep signal is generated and sent to the device control module. After receiving the sleep signal, the device control module adjusts the device state according to the preset sleep scenario, such as adjusting the seat angle, the vehicle audio volume, the interior lighting, the temperature controlled by the temperature control device, etc.

Based on the same inventive concept, an embodiment of the present invention further provides a vehicle cabin sleep recognition apparatus corresponding to the vehicle cabin sleep recognition method. Since the principle of the apparatus for solving the problem is similar to the aforementioned vehicle cabin sleep recognition method in the embodiments of the present invention, the implementation of the apparatus can refer to the implementation of the method, and repeated descriptions are omitted herein.

Please refer to FIG. 9, which shows a schematic structural diagram of the vehicle cabin sleep recognition apparatus according to an embodiment of the present invention. The apparatus includes:

> an acquisition module 901, configured to acquire a target image of a vehicle cabin, wherein the target image includes a passenger;
> a judgment module 902, configured to determine whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;
> a first determination module 903, configured to determine a verification result for the sleep state of the passenger based on a state of a target object in the target image upon determining that the passenger is in a sleep state; and
> a second determination module 904, configured to determine a sleep state recognition result of the passenger in the vehicle cabin based on the verification result for the sleep state.

In some embodiments, in the vehicle cabin sleep recognition method, the judgment module, when configured to determine whether the passenger is in a sleep state by using a sleep state recognition method matched with an eye confidence judgment result, is specifically configured to:

determine whether the passenger is in the sleep state based on the passenger's eye state in the target image when the eye confidence judgment result of the passenger in the target image is qualified; and

determine whether the passenger is in a sleep state based on the passenger's body pose in the target image when the eye confidence judgment result of the passenger in the target image is unqualified.

In some embodiments, in the vehicle cabin sleep recognition apparatus, the judgment module, when configured to determine whether the passenger is in the sleep state based on the passenger's eye state in the target image, is specifically configured to:

determine a cumulative duration of eye-closed images with the eye state closed within a preset first time period based on the passenger's eye state in the target image;

judge whether the cumulative duration of the eye-closed images satisfies a preset eye-closed duration requirement; and

if the cumulative duration of the eye-closed images satisfies a preset eye-closed duration requirement, determine that the passenger is in a sleep state.

In some embodiments, in the vehicle cabin sleep recognition apparatus, the judgment module, when configured to determine whether the passenger is in a sleep state based on the passenger's body pose in the target image, is specifically configured to:

recognize target human skeleton points of the passenger in the target image;

determine a head-body length ratio and a body trunk inclination of the passenger based on the target human skeleton points of the passenger, wherein the head-body length ratio represents a length ratio between a head and a torso of the passenger in the target image, and the body trunk inclination represents an inclination of the passenger's body trunk in the target image relative to a horizontal direction of the image; and

determine whether the passenger is in a sleep state based on the head-body length ratio and the body trunk inclination.

In some embodiments, in the vehicle cabin sleep recognition apparatus, the judgment module, when configured to determine whether the passenger is in a sleep state based on the head-body length ratio and the body trunk inclination, is specifically configured to:

determine a seating region of the passenger in the cabin based on the target human skeleton points of the passenger, wherein different seating regions correspond to different head-body length ratio conditions and body trunk inclination conditions;

judge whether the head-body length ratio of the passenger satisfies the head-body length ratio condition corresponding to the seating region, and whether the body trunk inclination of the passenger satisfies the body trunk inclination condition corresponding to the seating region; and

if both the head-body length ratio condition and the body trunk inclination condition are satisfied, determine that the passenger is in a sleep state.

In some embodiments, in the vehicle cabin sleep recognition apparatus, different seating regions correspond to different head-body length ratio conditions and body trunk inclination conditions, and are determined based on images of passengers in a lying down or torso-inclined posture, obtained from different vehicle models.

In some embodiments, in the vehicle cabin sleep recognition apparatus, different seating regions correspond to different body trunk inclination conditions, including:

a body trunk inclination condition corresponding to a passenger on a right side of a first row, wherein the torso inclines to the left;

a body trunk inclination condition corresponding to a passenger on a left side of the first row, wherein the torso inclines to the right; and

a body trunk inclination condition corresponding to a passenger in a second row, wherein the body trunk inclination conforms to a preset threshold range.

In some embodiments, in the vehicle cabin sleep recognition apparatus, the body trunk inclination condition corresponding to the passenger on the right side of the first row is that a tangent value of the body trunk inclination is less than 0;

the body trunk inclination condition corresponding to the passenger on the left side of the first row is that a tangent value of the body trunk inclination is greater than 0; and
the body trunk inclination condition corresponding to the passenger in the second row is that a tangent value of the body trunk inclination is greater than a preset first threshold and less than a preset second threshold.

In some embodiments, in the vehicle cabin sleep recognition apparatus, the judgment module is further configured to, before determining whether the passenger is in a sleep state by using a sleep state recognition method matched with an eye confidence judgment result based on the eye confidence judgment result of the passenger in the target image, determine an eye confidence judgment result based on an included angle between a face orientation and a camera imaging direction, wherein the smaller the included angle between the face orientation and the camera imaging direction is, the higher the confidence of the eye regions for sleep recognition is; the larger the included angle between the face orientation and the camera imaging direction is, the lower the confidence of the eye regions for sleep recognition is.

In some embodiments, in the vehicle cabin sleep recognition apparatus, the judgment module, when configured to determine an eye confidence judgment result based on an included angle between a face orientation and a camera imaging direction, is specifically configured to:

determine an included angle parameter corresponding to the included angle between the face orientation and the camera imaging direction;
if the included angle parameter satisfies a preset confidence condition, determine that the eye confidence judgment result is qualified; and
if the included angle parameter does not satisfy the preset confidence condition, determine that the eye confidence judgment result is unqualified.

In some embodiments, in the vehicle cabin sleep recognition apparatus, the judgment module, when configured to determine an included angle parameter corresponding to the included angle between the face orientation and the camera imaging direction, is specifically configured to:

define coordinates of an origin of a camera coordinate system in a head coordinate system;
calculate a first included angle between a line connecting the origin of the camera coordinate system and an origin of the head coordinate system and a z-axis of the head coordinate system, and determine an included angle parameter corresponding to the first included angle, wherein the included angle parameter corresponding to the first included angle is configured for eye confidence judgment; and
simultaneously calculate a second included angle between a projection, on an xOy plane of the head coordinate system, of the line connecting the origin of the camera coordinate system and the origin of the head coordinate system and an x-axis of the head coordinate system, and determine an included angle parameter corresponding to the second included angle.

In some embodiments, in the vehicle cabin sleep recognition apparatus, the first determination module, when configured to determine a verification result for the sleep state of the passenger based on a detection result for a target behavior of the passenger in the target image, is specifically configured to:

determine an action detection result of a target part of the passenger and/or a detection result of using a target object by the passenger in the target image within a preset second time period;
judge whether the action detection result of the target part and/or the detection result of using the target object satisfy corresponding sleep suppression conditions; and
if either the action detection result of the target part satisfies a corresponding sleep suppression condition or the detection result of using the target object satisfies a corresponding sleep suppression condition, determine that the verification result for the sleep state is sleep suppression.

In some embodiments, in the vehicle cabin sleep recognition apparatus, the first determination module, when configured to determine an action detection result of a target part of the passenger in the target image within a preset second time period, is specifically configured to:

determine a rotation angle parameter of the passenger's face in the target image within the preset second time period, wherein the rotation angle parameter represents a rotation angle of the face; and

determine a moving distance of the passenger's arm in the target image within the preset second time period.

In some embodiments, in the vehicle cabin sleep recognition apparatus, the first determination module, when configured to judge whether the action detection result of the target part satisfies a corresponding sleep suppression condition, is specifically configured to:

judge whether the rotation angle parameter of the face is greater than a preset third threshold; and
judge whether the moving distance of the passenger's arm is greater than a preset fourth threshold, wherein different vehicle models and different seating regions correspond to different preset fourth thresholds.

In some embodiments, in the vehicle cabin sleep recognition apparatus, the first determination module, when configured to judge whether the detection result of using the target object satisfies a corresponding sleep suppression condition, is specifically configured to:

detect whether a target object is present in the image;
if the target object is present in the image, determine whether the target object is in a hand-held state based on a contact relationship between the target object and the hand, and a contact relationship between the target object and a preset reference object; and
if the target object is present in the image, determine that the verification result is sleep suppression.

In some embodiments, in the vehicle cabin sleep recognition apparatus, the second determination module, when configured to determine a sleep state recognition result of the passenger in the vehicle cabin based on the verification result for the sleep state, is specifically configured to:

when the verification result is sleep suppression, update the passenger's sleep state recognition result to a non-sleep state; and
when the verification result is non-suppression of sleep, maintain the passenger's sleep state recognition result as the sleep state.

In some embodiments, in the vehicle cabin sleep recognition apparatus, the sleep state recognition result of passengers in the vehicle cabin is configured to adjust a state of at least one device in the vehicle cabin according to a preset sleep scenario.

Based on the same inventive concept, an embodiment of the present invention further provides an electronic device corresponding to the vehicle cabin sleep recognition method. Since the principle of the electronic device for solving the problem is similar to the aforementioned vehicle cabin sleep recognition method in the embodiments of the present invention, the implementation of the electronic device can refer to the implementation of the method, and repeated descriptions are omitted herein.

Please refer to FIG. 10, which shows a schematic structural diagram of the electronic device according to an embodiment of the present invention. The electronic device 1000 includes: a processor 1002, a memory 1001, and a bus. The memory 1001 stores machine-readable instructions executable by the processor 1002. When the electronic device 1000 is in operation, the processor 1002 communicates with the memory 1001 via the bus. The machine-readable instructions, when executed by the processor 1002, cause the processor 1002 to perform the steps of the vehicle cabin sleep recognition method.

Based on the same inventive concept, an embodiment of the present invention further provides a computer-readable storage medium corresponding to the vehicle cabin sleep recognition method. Since the principle of the computer-readable storage medium for solving the problem is similar to the aforementioned vehicle cabin sleep recognition method in the embodiments of the present invention, the implementation of the computer-readable storage medium can refer to the implementation of the method, and repeated descriptions are omitted herein.

A computer-readable storage medium storing a computer program that, when executed by a processor, causes the processor to perform the steps of the vehicle cabin sleep recognition method.

Those skilled in the art can clearly understand that for the convenience and conciseness of description, the specific working processes of the described systems and apparatuses can refer to the corresponding processes in the method embodiments, and are not repeated herein. In the several embodiments provided in the present invention, it should be understood that the disclosed systems, apparatuses, and methods may be implemented in other ways. The apparatus embodiments described above are merely illustrative. For example, the division of modules is only a logical function division, and there may be other division manners in actual implementation. For example, multiple modules or components may be combined or integrated into another system, or some features may be ignored or not executed. Furthermore, the mutual coupling or direct coupling or communication connection shown or discussed may be indirect coupling or communication connection through some interfaces, apparatuses, or modules, and may be implemented as electrical, mechanical, or otherwise.

The modules described as separate components may or may not be physically separated. The components displayed as modules may or may not be physical units, i.e., they may be located in one place or distributed over multiple network units. Some or all of the units may be selected according to actual needs to achieve the objectives of the solutions of the embodiments.

In addition, the functional units in the various embodiments of the present invention may be integrated into one processing unit, or each unit may exist physically alone, or two or more units may be integrated into one unit.

If the functions are implemented in the form of software functional units and sold or used as independent products, they may be stored in a non-volatile computer-readable storage medium executable by a processor. Based on such understanding, the essence of the technical solutions, or the part contributing to the prior art, or part of the technical solutions of the present invention, may be embodied in the form of a software product. The computer software product is stored in a storage medium and includes several instructions for enabling a computer device (which may be a personal computer, a server, a network device, etc.) to perform all or part of the steps of the methods described in the various embodiments of the present invention. The aforementioned storage media include: U disk, mobile hard disk, read-only memory (ROM), random access memory (RAM), magnetic disk, optical disk, and other media that can store program code.

The above are only specific implementations of the present invention, but the scope of protection of the present invention is not limited thereto. Any person skilled in the art can easily conceive variations or substitutions within the technical scope disclosed in the present invention, which shall fall within the scope of protection of the present invention. Therefore, the scope of protection of the present invention should be subject to the scope of protection of the claims.

INDUSTRIAL PRACTICALITY

In the embodiments of the present invention, a vehicle cabin sleep recognition method and apparatus, electronic device, and medium are provided. The vehicle cabin sleep recognition method includes: first acquiring a target image of a vehicle cabin; then, based on whether the passenger's eye region in the target image is reliable for sleep recognition, determining whether the passenger is in a sleep state by using different sleep state recognition methods; subsequently, suppressing the sleep state detection result based on a detection result of target behaviors of the passenger in the image, thereby expanding the determination scope of sleep recognition by utilizing different detection methods and improving the detection accuracy of sleep recognition; and additionally, preventing false detection of the sleep state based on the detection result of the target behaviors of the passenger, thereby further enhancing the detection accuracy of sleep recognition.

In addition, it can be understood that the vehicle cabin sleep recognition method and apparatus, electronic device, and medium provided by the embodiments of the present invention are reproducible and can be used in various industrial applications. For example, the vehicle cabin sleep recognition method and apparatus, electronic device, and medium provided by the embodiments of the present invention can be used in the field of vehicle services.

**Claims**

1. A vehicle cabin sleep recognition method, **characterized by** comprising:

   acquiring a target image of a vehicle cabin, wherein the target image comprises a passenger;
   determining whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;
   in response to the eye region being reliable, determining a verification result for the sleep state of the passenger based on a detection result for a target behavior of the passenger in the target image; and
   determining a sleep state recognition result of the passenger in the vehicle cabin based on the verification result for the sleep state.

2. The vehicle cabin sleep recognition method according to claim 1, wherein the determining whether the passenger is in a sleep state by using a sleep state recognition method matched with an eye confidence judgment result comprises:

   determining whether the passenger is in the sleep state based on an eye state of the passenger in the target image when the eye confidence judgment result of the passenger in the target image is qualified; and
   determining whether the passenger is in the sleep state based on a body pose of the passenger in the target image when the eye confidence judgment result of the passenger in the target image is unqualified.

3. The vehicle cabin sleep recognition method according to claim 2, wherein the determining whether the passenger is in the sleep state based on an eye state of the passenger in the target image comprises:

determining a cumulative duration of eye-closed images with the eye state closed within a preset first time period based on the eye state of the passenger in the target image;
judging whether the cumulative duration of the eye-closed images satisfies a preset eye-closed duration requirement; and
in response to the cumulative duration of the eye-closed images satisfying the preset eye-closed duration requirement, determining that the passenger is in the sleep state.

4. The vehicle cabin sleep recognition method according to claim 2, wherein the determining whether the passenger is in the sleep state based on a body pose of the passenger in the target image comprises:

recognizing target human skeleton points of the passenger in the target image;
determining a head-body length ratio and a body trunk inclination of the passenger based on the target human skeleton points of the passenger, wherein the head-body length ratio represents a length ratio between a head and a torso of the passenger in the target image, and the body trunk inclination represents an inclination of a body trunk of the passenger in the target image relative to a horizontal direction of the image; and
determining whether the passenger is in the sleep state based on the head-body length ratio and the body trunk inclination.

5. The vehicle cabin sleep recognition method according to claim 4, wherein the determining whether the passenger is in the sleep state based on the head-body length ratio and the body trunk inclination comprises:

determining a seating region of the passenger in the cabin based on the target human skeleton points of the passenger, wherein different seating regions correspond to different head-body length ratio conditions and body trunk inclination conditions;
judging whether the head-body length ratio of the passenger satisfies a head-body length ratio condition corresponding to the seating region, and whether the body trunk inclination of the passenger satisfies a body trunk inclination condition corresponding to the seating region; and
in response to both the head-body length ratio condition and the body trunk inclination condition being satisfied, determining that the passenger is in the sleep state.

6. The vehicle cabin sleep recognition method according to claim 5, wherein different seating regions correspond to different head-body length ratio conditions and body trunk inclination conditions, and are determined based on images of passengers in a lying down or torso-inclined posture, obtained from different vehicle models.

7. The vehicle cabin sleep recognition method according to claim 5, wherein different seating regions correspond to different body trunk inclination conditions, comprising:

a body trunk inclination condition corresponding to a passenger on a right side of a first row, wherein the torso inclines to the left;
a body trunk inclination condition corresponding to a passenger on a left side of the first row, wherein the torso inclines to the right; and
a body trunk inclination condition corresponding to a passenger in a second row, wherein the body trunk inclination conforms to a preset threshold range.

8. The vehicle cabin sleep recognition method according to claim 5 or 7, wherein

a body trunk inclination condition corresponding to a passenger on a right side of a first row is that a tangent value of the body trunk inclination is less than 0;
a body trunk inclination condition corresponding to a passenger on a left side of the first row is that the tangent value of the body trunk inclination is greater than 0; and
a body trunk inclination condition corresponding to a passenger in a second row is that the tangent value of the body trunk inclination is greater than a preset first threshold and less than a preset second threshold.

9. The vehicle cabin sleep recognition method according to claim 1, wherein before the determining whether the passenger is in a sleep state by using a sleep state recognition method matched with an eye confidence judgment result based on the eye confidence judgment result of the passenger in the target image, the method further comprises:

determining the eye confidence judgment result based on an included angle between a face orientation and a camera imaging direction, wherein the smaller the included angle between the face orientation and the camera imaging direction is, the higher the confidence of the eye regions for sleep recognition is; the larger the included angle between the face orientation and the camera imaging direction is, the lower the confidence of the eye regions for sleep recognition is.

10. The vehicle cabin sleep recognition method according to claim 9, wherein the determining an eye confidence judgment result based on an included angle between a face orientation and a camera imaging direction comprises:

determining an included angle parameter corresponding to the included angle between the face orientation and the camera imaging direction;
in response to the included angle parameter satisfying a preset confidence condition, determining that the eye confidence judgment result is qualified; and
in response to the included angle parameter not satisfying the preset confidence condition, determining that the eye confidence judgment result is unqualified.

11. The vehicle cabin sleep recognition method according to claim 10, wherein the determining an included angle parameter corresponding to the included angle between the face orientation and the camera imaging direction comprises:

defining coordinates of an origin of a camera coordinate system in a head coordinate system;
calculating a first included angle between a line connecting the origin of the camera coordinate system and an origin of the head coordinate system and a z-axis of the head coordinate system, and determining an included angle parameter corresponding to the first included angle, wherein the included angle parameter corresponding to the first included angle is configured for eye confidence judgment; and
simultaneously calculating a second included angle between a projection, on an xOy plane of the head coordinate system, of the line connecting the origin of the camera coordinate system and the origin of the head coordinate system and an x-axis of the head coordinate system, and determining an included angle parameter corresponding to the second included angle.

12. The vehicle cabin sleep recognition method according to claim 1, wherein the determining a verification result for the sleep state of the passenger based on a detection result for a target behavior of the passenger in the target image comprises:

determining an action detection result of a target part of the passenger and/or a detection result of using a target object by the passenger in the target image within a preset second time period;
judging whether the action detection result of the target part and/or the detection result of using the target object satisfy corresponding sleep suppression conditions; and
in response to either the action detection result of the target part satisfies a corresponding sleep suppression condition or the detection result of using the target object satisfies a corresponding sleep suppression condition, determining that the verification result for the sleep state is sleep suppression.

13. The vehicle cabin sleep recognition method according to claim 12, wherein the determining an action detection result of a target part of the passenger in the target image within a preset second time period comprises:

determining a rotation angle parameter of a face of the passenger in the target image within the preset second time period, wherein the rotation angle parameter represents a rotation angle of the face; and
determining a moving distance of an arm of the passenger in the target image within the preset second time period.

14. The vehicle cabin sleep recognition method according to claim 13, wherein the judging whether the action detection result of the target part satisfies a corresponding sleep suppression condition comprises:

judging whether the rotation angle parameter of the face is greater than a preset third threshold; and

judging whether the moving distance of the arm of the passenger is greater than a preset fourth threshold, wherein different vehicle models and different seating regions correspond to different preset fourth thresholds.

15. The vehicle cabin sleep recognition method according to claim 13, wherein the judging whether the detection result of using the target object satisfies a corresponding sleep suppression condition comprises:

   detecting whether the target object is present in the image;
   in response to the target object being present in the image, determining whether the target object is in a hand-held state based on a contact relationship between the target object and a hand, and a contact relationship between the target object and a preset reference object; and
   in response to the target object being present in the image, determining that the verification result is the sleep suppression.

16. The vehicle cabin sleep recognition method according to claim 1, wherein the determining a sleep state recognition result of the passenger in the vehicle cabin based on the verification result for the sleep state comprises:

   when the verification result is sleep suppression, updating the sleep state recognition result of the passenger to a non-sleep state; and
   when the verification result is non-suppression of sleep, maintaining the sleep state recognition result of the passenger as the sleep state.

17. The vehicle cabin sleep recognition method according to claim 1, wherein the sleep state recognition result of the passenger in the vehicle cabin is configured to adjust a state of at least one device in the vehicle cabin according to a preset sleep scenario.

18. A vehicle cabin sleep recognition apparatus, **characterized by** comprising:

   an acquisition module, configured to acquire a target image of a vehicle cabin, wherein the target image comprises a passenger;
   a judgment module, configured to determine whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition;
   a first determination module, configured to determine a verification result for the sleep state of the passenger based on a state of a target object in the target image upon determining that the passenger is in the sleep state; and
   a second determination module, configured to determine a sleep state recognition result of the passenger in the vehicle cabin based on the verification result for the sleep state.

19. An electronic device, **characterized by** comprising a processor, a memory, and a bus, wherein the memory stores machine-readable instructions executable by the processor; when the electronic device is in operation, the processor communicates with the memory via the bus; and the machine-readable instructions, when executed by the processor, cause the processor to perform the steps of the vehicle cabin sleep recognition method according to any one of claims 1 to 17.

20. A computer-readable storage medium, **characterized by** storing a computer program that, when executed by a processor, causes the processor to perform the steps of the vehicle cabin sleep recognition method according to any one of claims 1 to 17.

Acquire a target image of a vehicle cabin, wherein the target image includes a passenger — S101

Determine whether the passenger is in a sleep state by using a sleep state recognition method matched with an eye confidence judgment result based on the eye confidence judgment result of the passenger in the target image, wherein the eye confidence judgment result represents whether an eye region is reliable for sleep recognition — S102

If the eye region is reliable, determine a verification result for the sleep state of the passenger based on a detection result for a target behavior of the passenger in the target image — S103

Determine a sleep state recognition result of the passenger in the vehicle cabin based on the verification result for the sleep state — S104

**FIG. 1**

**FIG. 2**

Determine whether the passenger is in the
sleep state based on the passenger's eye
state in the target image when the eye
confidence judgment result of the passenger
in the target image is qualified

S301

Determine whether the passenger is in the
sleep state based on the passenger's body
pose in the target image when the
passenger's eye confidence judgment result
in the target image is unqualified

S302

**FIG. 3**

Recognize target human skeleton points of the
passenger in the target image

S401

Determine a head-body length ratio and a body trunk
inclination of the passenger based on the target human
skeleton points of the passenger, wherein the head-body
length ratio represents a length ratio between a head and
a torso of the passenger in the target image, and the
body trunk inclination represents an inclination of the
passenger's body trunk in the target image relative to a
horizontal direction of the image

S402

Determine whether the passenger is in a sleep state
based on the head-body length ratio and the body
trunk inclination

S403

**FIG. 4**

**FIG. 5**

**FIG. 6**

**FIG. 7**

**FIG. 8**

| | |
|---|---|
| Acquisition module | 901 |
| Judgment module | 902 |
| First determination module | 903 |
| Second determination module | 904 |

**FIG. 9**

**FIG. 10**

## INTERNATIONAL SEARCH REPORT

| | International application No. |
|---|---|
| | **PCT/CN2024/121533** |

**A.    CLASSIFICATION OF SUBJECT MATTER**

G06V20/59(2022.01)i;  G06V40/18(2022.01)n

According to International Patent Classification (IPC) or to both national classification and IPC

**B.    FIELDS SEARCHED**

Minimum documentation searched (classification system followed by classification symbols)

IPC：G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 睡, 疲, 困, 头, 脸, 眼, 摄像头, 相机, 角, 朝向, 视线, 可信, 置信, 身体, 躯干, 比, 斜, sleep, tired, sleepy, head, face, eye, CCD, camera, angle, orientation, sight, believable, confidence, body, ratio, tilt

**C.    DOCUMENTS CONSIDERED TO BE RELEVANT**

| Category* | Citation of document, with indication, where appropriate, of the relevant passages | Relevant to claim No. |
|---|---|---|
| PX | CN 118470695 A (HANGZHOU RUIJIAN ZHIXING TECHNOLOGY CO., LTD.) 09 August 2024 (2024-08-09) <br> claims 1-20 | 1-20 |
| Y | CN 118230300 A (XIAMEN HIGHDART ELECTRONIC INFORMATION CO., LTD.) 21 June 2024 (2024-06-21) <br> description, paragraphs 24-69 and 81-86 | 1-3, 9-20 |
| Y | CN 117883044 A (ARCSOFT CORP., LTD.) 16 April 2024 (2024-04-16) <br> description, paragraphs 87-92 | 1-3, 9-20 |
| Y | CN 117373001 A (BOTAI INTERNET OF VEHICLES (NANJING) CO., LTD.) 09 January 2024 (2024-01-09) <br> description, paragraphs 34-82 | 1-3, 9-20 |
| A | CN 112764523 A (BEIJING EYECOOL TECHNOLOGY CO., LTD. et al.) 07 May 2021 (2021-05-07) <br> entire document | 1-20 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 January 2025** | **22 January 2025** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/121533** |

**C.    DOCUMENTS CONSIDERED TO BE RELEVANT**

| Category* | Citation of document, with indication, where appropriate, of the relevant passages | Relevant to claim No. |
|---|---|---|
| A | CN 111145497 A (GUANGDONG UNIVERSITY OF TECHNOLOGY) 12 May 2020 (2020-05-12)<br>    entire document | 1-20 |
| A | CN 117755315 A (CHONGQING CHANGAN AUTOMOBILE CO., LTD.) 26 March 2024 (2024-03-26)<br>    entire document | 1-20 |

Form PCT/ISA/210 (second sheet) (July 2022)

**INTERNATIONAL SEARCH REPORT**
Information on patent family members

| International application No. |
| --- |
| **PCT/CN2024/121533** |

| Patent document cited in search report | | | Publication date (day/month/year) | Patent family member(s) | Publication date (day/month/year) |
| --- | --- | --- | --- | --- | --- |
| CN | 118470695 | A | 09 August 2024 | None | |
| CN | 118230300 | A | 21 June 2024 | None | |
| CN | 117883044 | A | 16 April 2024 | None | |
| CN | 117373001 | A | 09 January 2024 | None | |
| CN | 112764523 | A | 07 May 2021 | None | |
| CN | 111145497 | A | 12 May 2020 | None | |
| CN | 117755315 | A | 26 March 2024 | None | |

Form PCT/ISA/210 (patent family annex) (July 2022)

**EP 4 718 395 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410931779